(19) Europäisches Patentamt

European Patent Office

Office européen des brevets

(11) EP 0 389 049 B1

# (12) FASCICULE DE BREVET EUROPEEN

(45) Date de publication et mention
de la délivrance du brevet:
**05.06.1996 Bulletin 1996/23**

(51) Int Cl.⁶: **G06T 7/20**

(21) Numéro de dépôt: **90200638.6**

(22) Date de dépôt: **19.03.1990**

(54) **Dispositif d'estimation de mouvement dans des images de télévision**

Gerät zur Bewegungsabschätzung von Fernsehbildern

Movement estimation device in television pictures

(84) Etats contractants désignés:
**DE FR GB**

(30) Priorité: **24.03.1989 FR 8903932**

(43) Date de publication de la demande:
**26.09.1990 Bulletin 1990/39**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB**

(72) Inventeur: **Lamnabhi, Moustanir**
**F-75007 Paris (FR)**

(74) Mandataire: **Chaffraix, Jean et al**
**Société Civile S.P.I.D.**
**156, Boulevard Haussmann**
**75008 Paris (FR)**

(56) Documents cités:
**GB-A- 2 172 171**

- **IEEE TRANSACTIONS ON PATTERN ANALYSIS AND MACHINE INTELLIGENCE, vol. PAMI-9, no. 1, janvier 1987, pages 56-73, IEEE, New York, US; I.K. SETHI et al.: "Finding trajectories of feature points in a monocular image sequence"**
- **COMPUTER VISION, GRAPHICS AND IMAGE PROCESSING, vol. 21, no. 2, février 1983, pages 262-279, Academic Press, Inc., New York, US; M. YACHIDA: "Determining velocity maps by spatio-temporal neighborhoods from image sequences"**

# Description

La présente invention concerne un dispositif d'estimation de mouvement pour des points d'une image faisant partie d'une séquence d'images à traiter, dispositif comportant un accès pour recevoir une séquence d'images-source, un circuit de détermination de mouvement pour fournir un premier vecteur mouvement pour tout point des images de la séquence à traiter, un circuit de cohérence pour fournir un signal de validation du vecteur mouvement et un circuit de sélection commandé par le circuit de cohérence pour fournir un vecteur mouvement définitif parmi ledit premier vecteur mouvement et au moins un vecteur mouvement de rechange, le circuit de cohérence comportant une première partie, pour fournir un premier signal de cohérence relatif à un point d'image, à partir, au moins, des premiers vecteurs mouvement attribués à des points entourant ledit point d'image et une deuxième partie pour fournir un deuxième signal de cohérence à partir des premiers signaux de cohérence attribués à des points correspondant audit point sur une pluralité d'images de la séquence à traiter, ledit deuxième signal de cohérence constituant le signal de validation du vecteur de mouvement commandant le circuit de sélection.

Des dispositifs de ce genre sont connus de la demande de brevet GB 2 172 171, ainsi que de l'article de Masahiko Yachida : "Determining Velocity Maps by Spatio-Temporal Neighborhoods from Image Sequences" paru dans COMPUTER VISION, GRAPHICS, AND IMAGE PROCESSING, vol.21, no.2, en février 1983, aux pages 262 à 279.

Le premier document, GB 2 172 171 propose, pour réduire l'erreur du vecteur de mouvement, de corriger le vecteur de mouvement au moyen des vecteurs de mouvements de blocs adjacents de l'image courante. Cependant, il est important pour l'utilisateur qu'il y ait une continuité dans le temps des images et que, de ce fait, l'estimation de mouvement soit cohérente d'une image à l'autre.

Le second document, article de Masahiko Yachida, propose de tenir compte de cette continuité dans le temps pour l'estimation de mouvement. On corrige l'estimation mouvement d'un point par celle des points voisins au cours des images précédente, actuelle et suivante, au moyen d'une moyenne pondérée. Cependant, on n'estime pas la cohérence des estimations de mouvement fournies.

Un autre dispositif est décrit dans la demande de brevet EP 0 341 769. Ce dispositif connu est utilisé dans un convertisseur de standards qui, notamment, transforme des images apparaissant à la cadence de 50 Hz en images à la cadence de 59,9 Hz. Ce document est cité comme faisant partie de l'état de la technique au sens de l'article 54(3) et (4) de la CBE. Au moyen de tels convertisseurs, il est aussi possible de transformer des images à la cadence de 50 Hz en images à la cadence de 100 Hz pour éviter, sur les téléviseurs, le phénomène gênant de papillottement.

Le dispositif connu comporte, pour fournir le signal de validation, trois mémoires destinées à contenir des vecteurs de cohérence relatifs à trois images successives. Bien que donnant satisfaction, la demanderesse s'est rendu compte que l'on pouvait encore améliorer ce dispositif en traitant des vecteurs de cohérence relatifs à un plus grand nombre d'images.

L'invention propose un dispositif du genre mentionné dans le préambule, qui permet donc de traiter des vecteurs de cohérence, relatif à un grand nombre d'images sans nécessiter l'utilisation de beaucoup de matériels.

Pour cela, un dispositif selon l'invention est remarquable en ce que la deuxième partie comporte des moyens d'accumulation de type récursif pour fournir un signal représentant l'accumulation de valeurs antérieures du premier signal de cohérence pour un point donné et des moyens de seuil pour rendre actif le deuxième signal de cohérence lorsque le signal d'accumulation excède un certain seuil fixé par l'utilisateur, lié au nombre d'images successives sur lesquelles est évaluée la cohérence.

Ainsi, en agissant sur la valeur de ce seuil le nombre d'images sur lequel la cohérence est établie, varie.

La description suivante, accompagnée des dessins ci-annexés, le tout donné à titre d'exemple non limitatif, fera bien comprendre comment l'invention peut être réalisée.

La figure 1 représente le schéma d'un dispositif conforme à l'invention coopérant avec un organe d'interpolation.

La figure 2 illustre les emplacements respectifs des images de la séquence-source et de la séquence à traiter.

La figure 3 montre comment l'interpolation est exécutée par l'organe d'interpolation.

La figure 4 montre la structure de la première partie du circuit de cohérence.

La figure 5 représente des points sur la base desquels la cohérence spatiale est examinée.

La figure 6 montre la structure de la deuxième partie du circuit de cohérence.

La figure 7 montre l'évolution d'une variable importante pour le fonctionnement du circuit de cohérence.

La figure 8 montre en détail un circuit de calcul faisant partie de ladite deuxième partie.

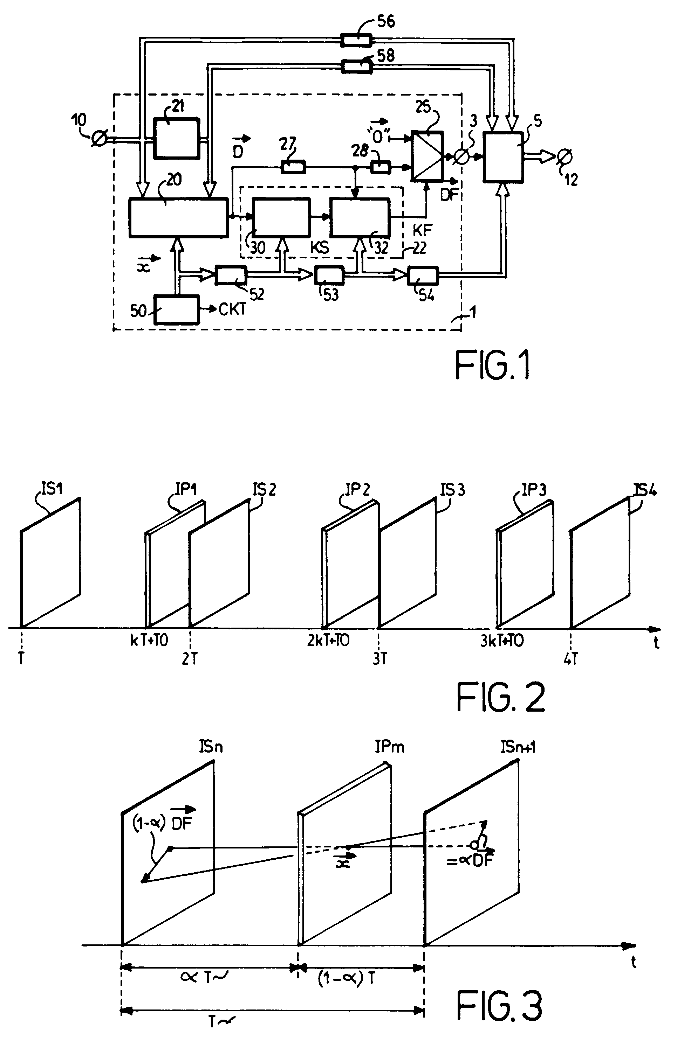

A la figure 1, le dispositif d'estimation de mouvement conforme à l'invention porte la référence 1, il fournit à sa borne de sortie 3 des vecteurs de mouvement $\vec{D}$F à un organe d'interpolation 5. Cet organe d'interpolation effectue un traitement sur des séquences d'images sources ..., IS1, IS2, IS3, IS4, ... (voir figure 2) qui surgissent à l'accès d'entrée 10 à des instants ..., T, 2T, 3T, 4T,... Ce traitement a pour but d'établir des séquences d'images ..., IP1, IP2, IP3, ... rendues disponibles sur l'accès de sortie 12 de l'organe 5. Ces images sont établies pour les instants ..., kT+TO, 2kT+TO, 3kT+TO, ... où k est un facteur qui définit la cadence d'apparition des images établies et TO est une origine de temps. Les points de ces images IP1 sont déterminés par l'organe d'interpolation 5 en mettant en application la formule suivante :

$$I_m(\vec{x}) = \alpha I_{n+1}[\vec{x}+(1-\alpha)\,\vec{DF}] + (1-\alpha)I_n(\vec{x}-\alpha\,\vec{DF})$$

où

$I_m(\vec{x})$    est la luminance du point de coordonnées $\vec{x}$ de l'image IP$_m$ à traiter par interpolation à partir des images IS$_n$ et IS$_{n+1}$ situées de part et d'autre, comme cela est représenté à la figure 3,

$\alpha$    est une fonction du temps et tel que $0 \leq \alpha \leq 1$,

$I_{n+1}(-)$    est la luminance du point dont les coordonnées sont données par l'argument entre parenthèses et qui fait partie de l'image IS$_{n+1}$,

$I_n(-)$    est la luminance du point dont les coordonnées sont données par l'argument et qui fait partie de l'image IS$_n$.

Le dispositif d'estimation 1 comporte tout d'abord un circuit de détermination de mouvement 20 qui, à partir d'images IS$_n$ et IS$_{n+1}$ détermine un premier vecteur mouvement $\vec{D}$. Un organe de mémoire 21 permet au circuit de prélever les points des images IS$_n$ et IS$_{n+1}$ en fonction des calculs à effectuer. Un circuit de cohérence 22 traite les différents vecteurs et $\vec{D}$ fournit un signal de validation KF pour un circuit de sélection 25. C'est ce circuit de sélection qui délivre le vecteur $\vec{DF}$ utilisé par l'organe d'interpolation 5.

Ce circuit de sélection 25 est représenté à la figure 1 sous la forme d'un circuit multiplexeur à deux entrées. A une entrée est appliqué le vecteur $\vec{D}$ convenablement retardé par des organes de retard 27 et 28 et à une autre entrée le vecteur $\vec{O}$ c'est-à-dire un vecteur correspondant à un mouvement nul. Ce vecteur constitue un vecteur de rechange lorsque le vecteur $\vec{D}$ n'est pas retenu. Si le signal KF est actif c'est le vecteur $\vec{DF}$ qui est donc retenu.

Le circuit de cohérence 22 est, conformément à l'invention, formé de deux parties : une partie 30 et une partie 32. La partie 30 fournit une indication sur la cohérence spatiale du vecteur $\vec{D}$, c'est-à-dire que ce vecteur $\vec{D}$ est comparé avec d'autres vecteurs $\vec{D}$ attribués à des points faisant partie du voisinage du point de coordonnée $\vec{x}$ et la partie 32 fournit le signal de validation KF en faisant une analyse temporelle des signaux KF relatifs à des points correspondants sur une pluralité d'images IP$_n$.

Les différents traitements sont effectués au rythme d'une base de temps 50 qui fournit donc les coordonnées $\vec{x}$ du point à traiter. Comme les traitements envisagés prennent du temps, différents organes de retard permettent de rétablir l'affectation des grandeurs calculées avec le point à traiter. Ainsi on a disposé un organe de retard 52 qui donne la valeur $\vec{x}$ à la partie 30, l'organe 53 à la partie 32 et l'organe 54 au circuit de sélection 25. Les organes de retard 56 et 58 fournissent le retard convenable pour les points des images de la séquence-source afin que l'organe d'interpolation puisse calculer le point de l'image interpolée en conformité avec le vecteur $\vec{DF}$ disponible à la sortie 3.

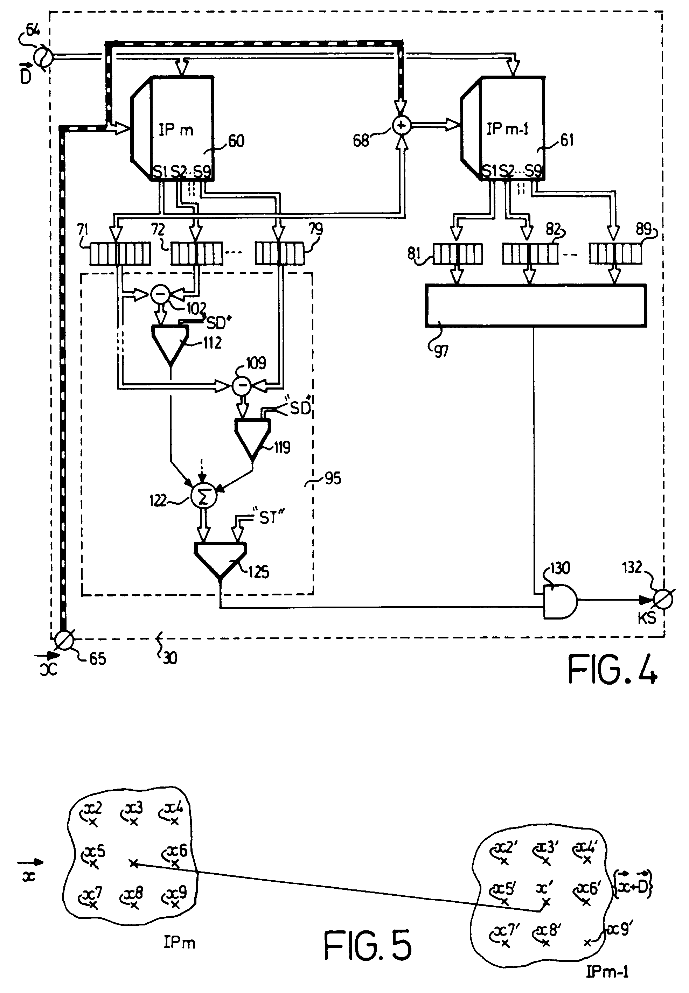

A la figure 4, on a représenté plus en détail la partie 30 qui, ici, effectue en fait une détermination de cohérence temporelle en plus d'une cohérence spatiale. Cette partie comporte deux organes de mémoire 60 et 61 destinés à contenir les vecteurs mouvement relatifs aux images IP$_m$ et IP$_{m-1}$. La partie 30 est munie d'une entrée 64 pour recevoir les différents vecteurs $\vec{D}$ et d'une entrée 65 pour recevoir l'indication $\vec{x}$ du point à traiter, l'organe 60 comporte neuf sorties SI à S9. Sur les sorties S2 à S9 apparaissent les vecteurs de déplacements affectés aux points entourant le point x, soient les points x2 à x9 montrés à la figure 5 et sur la sortie S1 le vecteur $\vec{D}$ relatif au point $\vec{x}$ lui-même. De la même manière, l'organe 61 comporte neuf sorties S1 à S9. A la sortie S1 apparaît le vecteur $\vec{D}'$ correspondant à un point x' qui était le point x à l'image précédente. L'organe de mémoire 61 est donc adressé au moyen d'un additionneur 68 qui effectue la somme (vectorielle) de la quantité présente à la sortie S1 de l'organe 60 et de la quantité x. Aux sorties S2 à S9 apparaissent les vecteurs mouvement des points x2' à x9' entourant le point x'. Différents registres 71 à 79 vont contenir les vecteurs aux sorties de l'organe 60 et des registres 81 à 89 vont contenir les vecteurs à la sortie de l'organe 61. Aux sorties de ces registres on a prévu deux organes de calcul de cohérence 95 et 97 de structure identique. Le vecteur mouvement affecté au point $\vec{x}$ va être comparé aux huit points précités. Ceci est effectué par des organes de soustraction 102 à 109 et des comparateurs 112 à 119 qui comparent les différences avec une valeur de seuil SD correspondant à un déplacement de quelques pixels.

Quand les différences sont inférieures au seuil, la valeur "1" est donnée aux sorties des comparateurs. Ces valeurs sont additionnées par un additionneur 122. La valeur de sortie de cet additionneur est comparée enfin à une valeur de seuil "ST", par exemple 4, au moyen d'un comparateur 125 de sorte qu'un signal actif de valeur "1" à la sortie du comparateur 125 indique qu'une majorité de vecteurs relatifs au voisinage sont cohérents entre eux. La même démarche est effectuée à l'intérieur de l'organe 97 relativement au point $\vec{x}'$. Une porte ET 130 combine les résultats des organes 95 et 97 pour fournir le signal KS à la sortie 132.

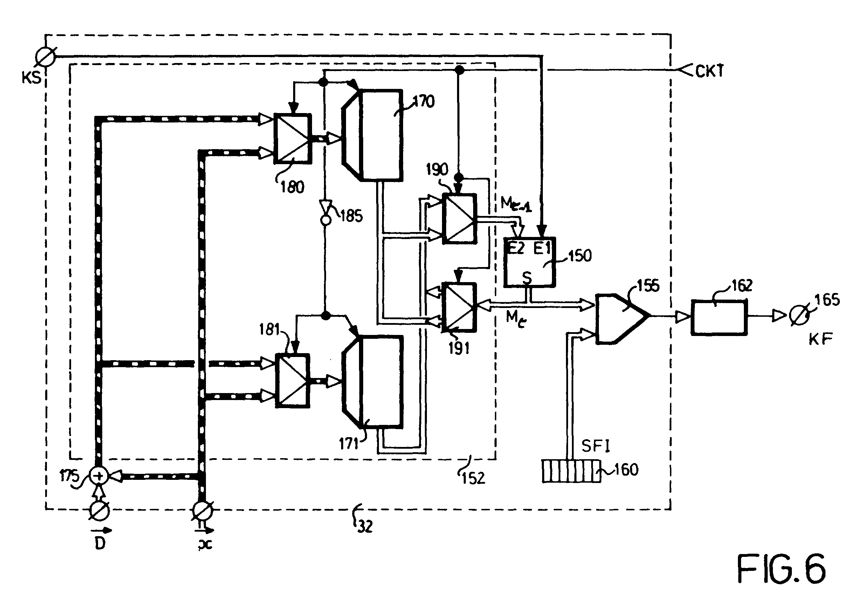

La partie 32 montrée à la figure 6, est formée de moyens d'accumulation élaborés autour d'un circuit de calcul 150 et d'un circuit de mémoire 152. Le circuit de calcul 150 comporte deux entrées E1 et E2 pour recevoir relativement à un point $\vec{x}$, le signal KS et une valeur $M_{t-1}(\vec{x}-\vec{D})$ calculée à l'image précédente et une sortie S pour fournir un signal $M_t$ à attribuer au point $\vec{x}$. Le circuit de calcul effectue les calculs suivants :

lorsque KS = 1 $M_t(\vec{x}) = 128 + 1/2[M_{t-1}(\vec{x} - \vec{D})]$
et
lorsque KS = 0 $M_t(\vec{x}) = 0$

$\vec{D}$ pourra être affecté d'un facteur a pour tenir compte des distances respectives des images-source et des images de la séquence à traiter.

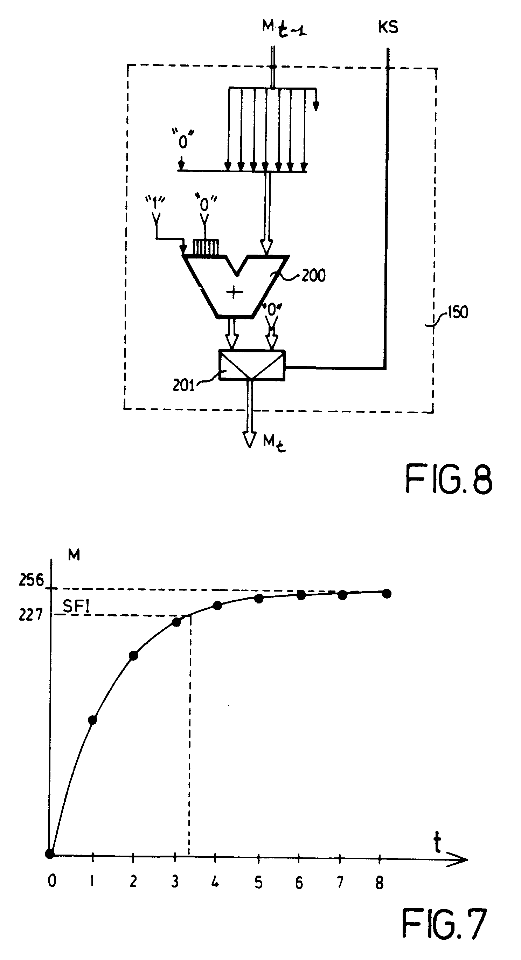

Lorsque KS = 1 pour un grand nombre d'images successives, on a représenté à la figure 7 son évolution. Un circuit à seuil 155 fixe la donnée sur laquelle la cohérence est évaluée, par exemple une valeur de seuil 227 indique que la cohérence est évaluée sur quatre images, une valeur supérieure de seuil permet de tester la cohérence sur un plus grand nombre d'images ; cette valeur de seuil SFI est contenue dans un registre 160 dont le contenu peut varier en fonction des désirs de l'utilisateur. Cette valeur peut varier de 128 à 255 si on travaille à 8 bits, ou de $2^n$ à $2^{n+1}-1$ si on travaille à n bits, $M_t(\vec{x})$ étant alors :

$$M_t(x) = A + \{M_{t-1}[x - \alpha\ D_0(x)]/B\}$$

où A peut avoir une valeur $2^n$,
et B peut avoir la valeur 2, comme ci-dessus.
Le signal fourni par le comparateur 155 peut être filtré par un filtre transversal 162 branché en sortie de la partie 32 et qui peut encore améliorer le résultat. Le signal KF apparaît à la sortie 165 du filtre 162.

Le circuit de mémoire 152 est formé à partir de deux mémoires 170 et 171 mises tour à tour en lecture et en écriture au rythme d'un signal CKT provenant de la base de temps 50, ce signal étant lié à la cadence des images à traiter. L'adresse d'écriture de ces mémoires est donnée par $\vec{x}$ et l'adresse de lecture par un additionneur 175 qui effectue la somme $\vec{x} - \vec{D}$, ce vecteur $\vec{D}$ étant considéré à la sortie du circuit 27. Le choix de ces adresses pour les mémoires 170 et 171 est effectué par les multiplexeurs 180 et 181 dont le premier est commandé par le signal CKT et le deuxième par le signal $\overline{CKT}$ fourni par l'inverseur 185. Les accès de données des mémoires 170 et 171 sont gérés par un multiplexeur de sortie 190 et un démultiplexeur d'entrée 191 commandé par le signal CKT.

A la figure 8 on a représenté le circuit 150. La division par deux de l'équation ci-dessus est effectuée en décalant les fils fournissant $M_{t-1}$ ; un additionneur 200 ajoute 128 à ce dernier résultat. Un multiplexeur 201 fournit le résultat M qui est soit "0" si KS = 0, soit le résultat de l'additionneur si KS = 1. Le résultat est alors stocké dans l'une des mémoires 170 ou 171 suivant le signal CKT.

Il est possible de réaliser plusieurs variantes qui tiennent compte du fait :

- que plusieurs vecteurs de rechange peuvent être différents du vecteur $\vec{O}$ et correspondre à des mouvements globaux,
- que la cohérence peut être effectuée, au niveau de la partie 30, sur une seule image,
- que le filtre 162 peut être tridimensionnel c'est-à-dire être un filtre spatio-temporel.

## Revendications

1. Dispositif d'estimation de mouvement pour des points d'une image faisant partie d'une séquence d'images à traiter (IP1, IP2, ...), dispositif comportant un accès (10) pour recevoir une séquence d'images-source (IS1, IS2, ...), un circuit de détermination de mouvement (20) pour fournir un premier vecteur mouvement ($\vec{D}$) pour tout point des images de la séquence à traiter, un circuit de cohérence (22) pour fournir un signal de validation (KF) du vecteur mouvement et un circuit de sélection (25) commandé par le circuit de cohérence pour fournir un vecteur mouvement définitif ($\vec{D}F$) parmi ledit premier vecteur mouvement et au moins un vecteur mouvement de rechange ($\vec{D}$), le circuit de cohérence (22) comportant une première partie (30), pour fournir un premier signal de cohérence (KS) relatif à un point d'image (x), à partir, au moins, des premiers mouvement ($\vec{D}$) attribués à des points $(x_2 - x_9)$ entourant ledit point d'image et une deuxième partie (32) pour fournir un deuxième signal de cohérence (KF) à partir des premiers signaux de cohérence attribués à des points correspondant audit point (x) sur une pluralité d'images de la séquence à traiter, ledit deuxième signal de cohérence constituant le signal de validation du vecteur de mouvement commandant le circuit de sélection, caractérisé en ce que la deuxième partie (32) comporte des moyens d'accumulation de type récursif (150, 152) pour fournir un signal (Mt) représentant l'accumulation de valeurs antérieures du premier signal de cohérence (KS) pour un point donné et des moyens de seuil (155) pour rendre actif le deuxième signal de cohérence (KF) lorsque le signal d'accumulation excède un certain seuil (SFI) fixé par l'utilisateur, lié au nombre d'images successives sur lesquelles est évaluée la cohérence.

2. Dispositif d'estimation de mouvement selon la revendication 1, caractérisé en ce que les moyens d'accumulation sont constitués :

- par des moyens de calculs (150) pour affecter au temps t à un point d'image de coordonnée x, la valeur $M_t(x)$ à partir d'une valeur antérieure $M_{t-1}(-)$ étant égale à :

$$M_t(x) = A + \{M_{t-1}[x - \alpha\ D(x)]/B\}$$

lorsque le premier signal de cohérence relatif au point x est actif et :

$$M_t(x) = 0$$

lorsque le premier signal est non actif,
A et B étant des constantes,

α étant un facteur d'ajustement à appliquer au premier vecteur mouvement D(x) pour tenir compte des distances respectives des images de la séquence-source et de la séquence à traiter,

- par des moyens de mémorisation (170-171) pour enregistrer les valeurs $M_t(-)$.

3. Dispositif d'estimation de mouvement selon la revendication 2 opérant sur des valeurs numériques à "n" bits, caractérisé en ce que :

$$A = 2^n$$
$$B = 2$$

et en ce que la valeur du seuil (SFI) peut être comprise entre $2^n$ et $2^{n+1}-1$.

4. Dispositif d'estimation de mouvement selon l'une des revendications 1 à 3, caractérisé en ce qu'un vecteur mouvement de rechange est le vecteur nul ($\vec{O}$) correspondant à l'absence de mouvement.

5. Dispositif d'estimation de mouvement selon l'une des revendications 1 à 4, caractérisé en ce qu'il est prévu un organe de filtrage (162) pour fournir le signal de validation pour le circuit de sélection à partir du deuxième signal de cohérence.

6. Dispositif d'estimation de mouvement selon l'une des revendications 1 à 5 destiné à un convertisseur de standards.

7. Dispositif d'estimation de mouvement selon l'une des revendications 1 à 5, destiné à un dispositif anti-papillotement.

**Patentansprüche**

1. Anordnung zur Bewegungsschätzung von Bildelementen eines Bildes, das einen Teil einer zu verarbeitenden Bildfolge (IP1, IP2, ...) bildet, wobei diese Anordnung einen Eingang (10) aufweist zum Empfangen einer Folge von Ausgangsbildern (IS1, IS2, ...), eine Bewegungsbestimmungsschaltung (20) zum Liefern eines ersten Bewegungsvektors ($\vec{D}$) für alle Bildelemente der zu verarbeitenden Bilder der Folge, eine Kohärenzschaltung (22) zum Liefern eines Bewertungssignals (KF) des Bewegungsvektors und eine Selektionsschaltung (25), die durch die Kohärenzschaltung gesteuert wird, zum Liefern eines endgültigen Bewegungsvektors ($\vec{DF}$) auf Basis des genannten ersten Bewegungsvektors und wenigstens einen alternativen Bewegungsvektors (($\vec{O}$)), wobei die Kohärenzschaltung (22) einen ersten Teil (30) aufweist zum Liefern eines ersten, einem Bildelement (x) zugehörenden Kohärenzsignals (KS), wenigstens auf Basis von ersten Bewegungsvektoren (($\vec{D}$)), die Bildelementen ($x_2 - x_9$) zugeordnet sind, die das genannte Bildelement umgeben, und einen zweiten Teil (32) zum Liefern eines zweiten Kohärenzsignals (KF) auf Basis der ersten Kohärenzsignale, die Bildelementen zugeordnet sind, die dem genannten Bildelement (x) entsprechen, einer Anzahl zu verarbeitender Bilder der Folge, wobei das genannte zweite Kohärenzsignal das Bewertungssignal des Bewegungsvektors bildet, das die Selektionsschaltung steuert, <u>dadurch gekennzeichnet</u>, daß der zweite Teil (32) Addiermittel vom Rekursivtyp (150, 152) aufweist zum Liefern eines Signals (Mt), das die Summe vorhergehender Werte des ersten Kohärenzsignals (KS) für ein bestimmtes Bildelement darstellt, und Schwellenmittel (155) zum Aktivieren des zweiten Kohärenzsignals (KF), wenn das Summensignal eine von dem Gebraucher bestimmte feste Schwelle (SFI) überschreitet, die der Anzahl aufeinanderfolgender Bilder, für welche die Kohärenz bewertet wird, zugeordnet ist.

2. Anordnung zur Bewegungsabschätzung nach Anspruch 1, <u>dadurch gekennzeichnet</u>, daß die Addiermittel durch die nachfolgenden Elemente gebildet werden:

- Rechenmittel (150) zum Zuordnen zu dem Zeitpunkt t zu einem Bildelement mit der Koordinate x, des Wertes $M_t(x)$ von dem vorhergehenden Wert $M_{t-1}(-)$, entsprechend

$$M_t(x) = A + \{M_{t-1}[x - \alpha \, D(x)]/B\}$$

wenn das erste Kohärenzsignal gegenüber dem Punkt x aktiv ist, und:

$$M_t(x) = 0$$

wenn das erste Signal nicht aktiv ist, wobei A und B Konstanten sind, wobei

α ein Einstellfaktor ist, der bei dem ersten Bewegungsvektor D(x) angewandt wird um die jeweiligen Abstände zwischen den Bildern von der Ausgangsfolge und der zu bearbeitenden Folge zu berücksichtigen,

- Speichermittel (170-171) zum Speichern der Werte $M_t(-)$.

3. Anordnung zur Bewegungsabschätzung nach Anspruch 2, wirksam bei digitalen n-Bit Werten, <u>dadurch gekennzeichnet,</u> daß

$$A = 2^n$$
$$B = 2$$

und daß der Schwellenwert (SFI) zwischen $2^n$ und $2^{n+1}-1$ liegt.

4. Anordnung zur Bewegungsabschätzung nach einem der Ansprüche 1 bis 3, <u>dadurch gekennzeichnet</u>, daß ein alternativer Bewegungsvektor der Vektor Null ($\vec{O}$) ist, entsprechend dem Fehlen einer Bewegung.

5. Anordnung zur Bewegungsabschätzung nach einem der Ansprüche 1 bis 4, <u>dadurch gekennzeichnet</u>, daß ein Filterelement (162) vorgesehen ist zum Liefern des Bewertungssignals für die Selektionsschaltung auf Basis des zweiten Kohärenzsignals.

6. Anordnung zur Bewegungsabschätzung nach einem der Ansprüche 1 bis 5 für einen Normenwandler.

7. Anordnung zur Bewegungsabschätzung nach einem der Ansprüche 1 bis 5, für eine Anti-Flimmeranordnung.

**Claims**

1. An arrangement for estimating motion of pixels of a picture forming part of a sequence of pictures to be processed (IP1, IP2, ...), the arrangement having an input (10) for receiving a sequence of source pictures (IS1, IS2, ...), a motion determining circuit (20) for supplying a first motion vector ($\vec{D}$) for all the pixels of the pictures of the sequence to be processed, a coherence circuit (22) for supplying a validation signal (KF) of the motion vector and a selection circuit (25), controlled by the coherence circuit, for supplying a definitive motion vector ($\vec{D}F$) on the basis of said first motion vector and at least one alternative motion vector ($\vec{O}$), the coherence circuit (22) comprising a first part (30) for supplying a first coherence signal (KS) relating to a pixel (x), at least on the basis of first motion vectors ($\vec{D}$) assigned to pixels (x2-x9) surrounding said pixel, and a second part (32) for supplying a second coherence signal (KF) on the basis of the first coherence signals assigned to pixels, corresponding to said pixel (x) of a number of pictures of the sequence to be processed, said second coherence signal constituting the validation signal of the motion vector controlling the selection circuit, characterized in that the second part (32) comprises adder means of the recursive type (150, 152), for supplying a signal ($M_t$) representing the sum of the previous values of the first coherence signal (KS) for a given pixel and threshold means (155) for activating the second coherence signal (KF) when the sum signal exceeds a predetermined threshold (SFI) fixed by the user and related to the number of successive pictures for which the coherence is evaluated.

2. A motion estimating arrangement as claimed in Claim 1, characterized in that the adder means are constituted by:

- calculating means (150) for assigning at the time t to a pixel having the coordinate x, the value $M_t(x)$ from a preceding value $M_{t-1}(-)$ which is equal to

$$M_t(x) = A + \{M_{t-1}[x - \alpha\, D(x)]/B\}$$

when the first coherence signal relative to the point x is active, and:

$$M_t(x) = 0$$

when the first signal is not active,
A and B being constants,

$\alpha$ being an adjusting factor to be applied to the first motion vector D(x) to take into account the respective distances between the pictures from the source sequence and from the sequence to be processed,

- storage means (170-171) for registering the values $M_t(-)$.

3. A motion estimating arrangement as claimed in Claim 2, acting on digital n-bit values, characterized in that

$$A = 2^n$$
$$B = 2$$

and in that the value of the threshold (SFI) may be between $2^n$ and $2^{n+1}-1$.

4. A motion estimating arrangement as claimed in Claim 1 to 3, characterized in that an alternative motion vector is the vector zero ($\vec{O}$) corresponding to the absence of motion.

5. A motion estimating arrangement as claimed in any one of the Claims 1 to 4, characterized in that a filter member (162) is provided to supply the validation signal for the selection circuit on the basis of the second coherence signal.

6. A motion estimating arrangement as claimed in any one of Claims 1 to 5, intended for a standards converter.

7. A motion estimating arrangement as claimed in any one of Claims 1 to 5, intended for an anti-flicker device.

FIG.1

FIG. 2

FIG.3

7

FIG.4

FIG.5

FIG.6

EP 0 389 049 B1

M·$t-1$        KS

"0"

"1"  "0"

200

+

"0"

201

M$t$

# FIG.8

M

256
227    SFI

t

0  1  2  3  4  5  6  7  8

# FIG.7